(19)

**Europäisches Patentamt**

**European Patent Office**

**Office européen des brevets**

(11) **EP 2 101 279 A2**

(12) **EUROPÄISCHE PATENTANMELDUNG**

(43) Veröffentlichungstag:
**16.09.2009  Patentblatt 2009/38**

(51) Int Cl.:
*G06K 7/00* (2006.01)      *H04B 1/52* (2006.01)

(21) Anmeldenummer: **09003451.3**

(22) Anmeldetag: **10.03.2009**

<table>
<tr><td>

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **10.03.2008   DE 102008013469**
**10.03.2008   DE 102008013468**

(71) Anmelder: **Pepperl + Fuchs GmbH**
**68307 Mannheim (DE)**

</td><td>

(72) Erfinder:
• **Sadeghfam, Arash**
**52070 Aachen (DE)**
• **Heuermann, Holger**
**52223 Stolberg-Breinig (DE)**

(74) Vertreter: **Schiffer, Axel Martin et al**
**Weber & Heim Patentanwälte**
**Irmgardstrasse 3**
**81479 München (DE)**

</td></tr>
</table>

(54) **Einstellbare Schaltung und RFID-Readereinheit**

(57)     Die vorliegende Erfindung betrifft eine einstellbare Schaltung zum Filtern eines Übertragungskanals eines RFID-Signals und zum Unterdrücken eines Trägersignals im Empfangspfad zwischen einem Eingangstor und einem Ausgangstor, mit mindestens einem einstellbaren Oszillator zum Erzeugen eines Oszillatorsignals, mit mindestens einer mit dem Oszillator zusammenwirkenden Eingangsmischerstufe zum Mischen eines Eingangssignals mit Hilfe des Oszillatorsignals auf eine Zwischenfrequenz und mit einem der Eingangsmischerstufe oder den Eingangsmischerstufen nachgeordneten Sperreinrichtung zum Unterdrücken des Trägersignals bei der Zwischenfrequenz.

**Fig. 2**

**Beschreibung**

Die vorliegende Erfindung betrifft in einem ersten Aspekt eine einstellbare Schaltung zum Filtern eines Übertragungskanals eines RFID-Signals und zum Unterdrücken eines Trägersignals im Empfangspfad zwischen einem Eingangstor und einem Ausgangstor. In einem zweiten Gesichtspunkt bezieht sich die Erfindung auf eine RFID-Readereinheit mit einer erfindungsgemäßen Schaltung.

RFID-Systeme werden in unterschiedlichsten Bereichen der automatischen Identifikation eingesetzt. Besonders im Bereich der Industrieautomation ist der Einsatz von RFID-Systemen vorteilhaft. Die wachsenden Anforderungen des Qualitätsmanagements und der Qualitätssicherung in der automatischen Fertigung lassen sich mit RFID-Systemen gut realisieren. Fertigungs- und Messdaten können in der Produktion einfach am Objekt selbst hinterlegt und mitgeführt werden. Sie sind so zu jeder Zeit an jedem Objekt verfügbar und dokumentierbar. Dies ermöglicht auch die Flexibilisierung der Fertigung. Fertigungsparameter können am Objekt gespeichert und in der jeweiligen Straße direkt ausgelesen werden. Objekte können zu beliebigen Zeiten der Serie entnommen und später wieder hinzugefügt werden, ohne dass Verwechselungen entstehen. Ein Ausfall des Zentralrechners stellt im Bezug auf die eindeutige Identifizierung und Lokalisierung der Objekte durch die dezentrale Speicherung der Daten auf RFID-Tags ebenfalls kein Problem dar (Klaus Finkenzeller: RFID-Handbuch, 3. Auflage, Carl Hanser Verlag, München).

Prinzipiell unterschiedet man bei RFID-Systemen zwischen gekoppelten und Mikrowellen-Systemen. Bei den gekoppelten Systemen erfolgt der Datenaustausch zwischen der Readereinheit und dem Tag durch kapazitive bzw. induktive Kopplung. Diese Systeme arbeiten in der Regel bei den Frequenzen 135 kHz oder 13,56 MHz. Bei den Mikrowellensystemen erfolgt eine rückwirkungsfreie, elektromagnetische Kopplung über das Fernfeld einer Antenne. Hierbei werden die Frequenzbereiche 860 - 930 MHz, 2,45 GHz sowie 5,8 GHz eingesetzt.

Ein wesentlicher Teil der verfügbaren RFID-Systeme funktioniert nach dem so genannten Backscatter- (bzw. Rückstreuungs-) Verfahren. Bei diesen Systemen sendet die Readereinheit ein konstantes, sinusförmiges Trägersignal (engl. *continuous wave*, CW), welches den Tag mit Energie versorgt. Weiterhin wird ein Teil des Trägersignals am Tag reflektiert. Über eine Änderung der Antennen-Rückstreueigenschaften moduliert der Tag die zu übertragenden Daten auf das Trägersignal, wobei die Daten dann im Frequenzspektrum als Seitenbänder um das Signal erkennbar sind.

Anhand der bekannten Gleichungen für die Feldausbreitung können die wesentlichen Empfangs- und Sendeleistungen einer Übertragungsstrecke wie folgt beschrieben werden:

1. Funkfelddämpfung $a_r^{-}$ in Dezibel in Abhängigkeit der Entfernung r und der Wellenlänge λ (λ = *c/f*):

$$a_r^{dB} = -10 \cdot \log\left(\frac{\lambda}{4\pi\, r}\right)^2.$$

2. Empfangsleistung nach der Tagantenne $P_{te}^{dBm}$ in dBm in Abhängigkeit der Sendeleistung der Readereinheit $P_{rs}^{dBm}$ in dBm, dem Gewinn der Sendeantenne $G_s^{dB}$ in Dezibel, dem Gewinn der Tagantenne $G_t^{dB}$ in Dezibel sowie der Funkfelddämpfung $a_r^{dB}$ in Dezibel:

$$P_{te}^{dBm} = P_{rs}^{dBm} + G_s^{dB} + G_t^{dB} - a_r^{dB}.$$

3. Sendeleistung des Tags $P_{ts}^{dBm}$ in dBm in Abhängigkeit der Empfangsleistung des Tags und der Modulationsverluste am Tag $P_{\mathrm{mod}}^{dB}$ in Dezibel:

$$P_{ts}^{dBm} = P_{te}^{dBm} - P_{\mathrm{mod}}^{dB}.$$

4. Empfangsleistung an der Readereinheit $P_{re}^{dBm}$ in dBm in Abhängigkeit der be schriebenen Parameter und:

$$P_{re}^{dBm} = P_{ts}^{dBm} + G_s^{dB} + G_t^{dB} - a_r^{dB}$$

$$= P_{rs}^{dBm} + 2G_s^{dB} + 2G_t^{dB} - 2a_r^{dB} - P_{\mathrm{mod}}^{dB}.$$

Weiterhin kann eine für die Entfernung erforderliche Systemdynamik D in Dezibel über die Differenz zwischen der Sendeleistung $P_{rs}^{dBm}$ und der Empfangsleistung $P_{re}^{dBm}$ der Readereinheit angegeben werden:

$$D^{dB} = P_{rs}^{dBm} - P_{re}^{dBm} .$$

In den Normen ISO-IEC 18000-6C sowie ETSI EN 302 208-1 sind die UHF RFID-Systeme im Frequenzbereich 860 MHz - 930 MHz reglementiert. Hierin werden beispielsweise eine maximale Sendeleistung von 2 W ERP (*equivalent radiated power*) sowie die einzusetzenden Modulationsverfahren vorgegeben.

Für eine Strecke von einem Meter ergibt sich hierdurch eine Funkfelddämpfung von ca. 31,2 dB, die sich bei jeder Verdopplung der Übertragungsstrecke um einen Faktor von 6 dB erhöht. Unter realistischen Bedingungen:

■ Sendeleistung 2 W ERP,

■ Betriebsfrequenz 866,5 MHz,

■ Antennengewinne der Readerantenne und der Tagantenne von jeweils 6 dBi und 1 dBi,

■ Modulationsverluste von 6 dB

■ sowie Reflexionsverluste von 0,5 dB

ergibt sich eine Eingangsleitung von ca. -19,7 dBm mit einer korrespondierenden notwendigen Systemdynamik von 55,9 dB als Differenz zwischen der Sendeleistung und der Empfangsleistung für diese Entfernung. Jede Verdopplung der Entfernung führt zu einer Reduzierung der Eingangsleistung um 12 dB, korrespondierend mit dem Erfordernis einer 12 dB höheren Systemdynamik.

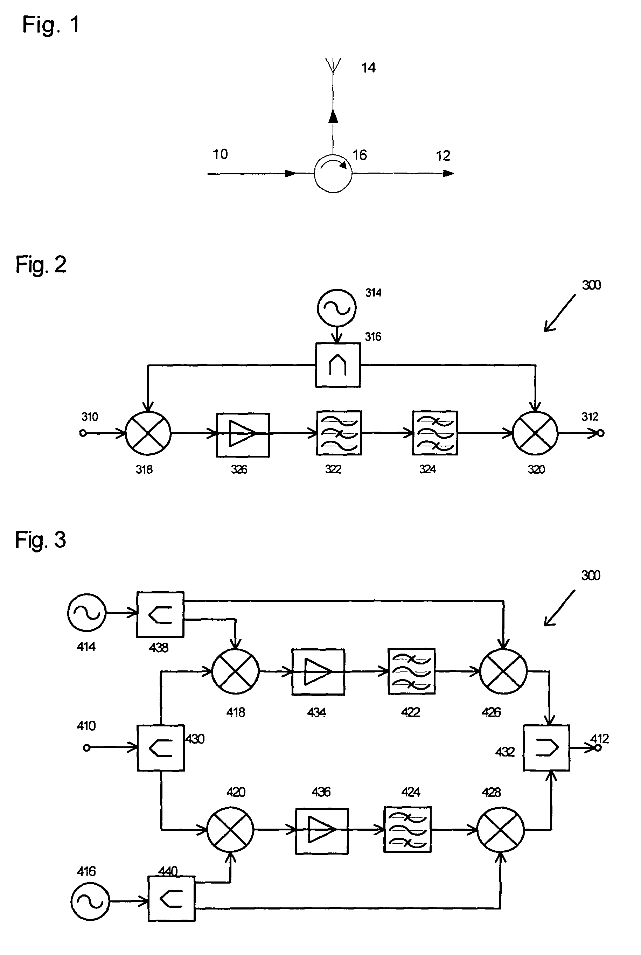

Beim Backscatter-Verfahren wird gleichzeitig das Trägersignal gesendet und die Tag-Antwort empfangen (Duplexbetrieb). Dies kann durch den Einsatz eines Zirkulators realisiert werden, wie er beispielsweise im Zusammenhang mit Fig. 1 beschrieben ist. Bei einem solchen Zirkulator kann es zu einem Übersprecher zwischen dem Sendeanschluss und dem Empfangspfad kommen, welcher mit abnehmender Isolation zwischen Sendepfad und Empfangspfad zunimmt. Die Höhe des Übersprechers bzw. der Isolation ist eine wichtige Systemeigenschaft und trägt stark zur Systemdynamik bei. Bei kommerziellen Zirkulatoren liegt der Übersprecher im Bereich von 20 bis 30 dB.

Ein Übersprecher kann sich auch durch Reflexionen des Sendesignals an der gemeinsamen Sende-/ Empfangsantenne ergeben, welche durch den Zirkulator aufgabengemäß an den Empfangspfad weitergegeben werden. Solche Reflexionen können beispielsweise auf geringfügigen Fehlanpassungen der Antenne beruhen.

Durch den Übersprecher, der auch als Crosstalk bezeichnet werden kann, können unter Umständen Tag-Antworten überlagert werden, so dass sie nicht mehr fehlerfrei zu demodulieren sind. Es sind daher Maßnahmen zur Reduzierung des Übersprechers erwogen worden.

Bekannte Ansätze zur Reduzierung des Trägersignalpegels im Empfangspfad beschränken sich primär auf die Unterdrückung des Übersprechers zwischen dem Sende- und dem Empfangspfad. Hierzu zählt zunächst der Einsatz von zwei getrennten Antennen zum Senden und Empfangen anstelle eines Zirkulators und einer kombinierten Sende-/Empfangsantenne. Hierbei kann durch eine optimale Ausrichtung der einzelnen Antennen sowie durch Einsatz von Dämpfungselementen an geeigneten Stellen der jeweiligen Antennengehäuse der Übersprecher zwischen dem Sende-und dem Empfangspfad weiter verbessert werden. Praktische Werte liegen hierbei um - 40 dB.

Nachteilig bei dieser Vorgehensweise ist die Empfindlichkeit des Übersprechers bezüglich Umwelteinflüssen in der Nähe des Systems oder des Tags. Hierzu zählen zum Beispiel größere reflektierende Flächen, die zu einem großen Übertragungsfaktor zwischen der Sende- und der Empfangsantenne führen, der als Störsignal die schwache Tag-Antwort überlagern kann.

Weiterhin kann die Schaltung durch ein festes, parallel geschaltetes Bauelement, das zusammen mit dem Ersatzschaltparameter des Übersprechers einen Resonanzkreis mit einer Resonanzfrequenz bei der Betriebsfrequenz bildet, erweitert werden. Dadurch kann der Übersprecher für die Betriebsfrequenz in Abhängigkeit der Güte des eingesetzten Elements um einige Dekaden kompensiert werden. Dieser Ansatz kann mit dem Einsatz von wenigen SMD-Komponenten realisiert werden und ist kostengünstig.

Ein Nachteil dieses Vorgehens besteht zunächst in der invarianten Frequenzlage der Kompensation, wodurch der Einsatz auf eine einzige Frequenz beschränkt wird. Außerdem kann wegen der diskreten Werte der verfügbaren Komponenten nur ein geringes Maß an Kompensation erreicht werden. Die Kompensation ist im Hinblick auf Änderungen an der Sende- und/oder der Empfangsantenne weiterhin vergleichsweise unflexibel. Schließlich ist die Kompensation schmalbandig, wodurch eine starke Abhängigkeit der absoluten Frequenzlage der Kompensation von den Fertigungstoleranzen entsteht. Dies führt dazu, dass die tatsächlich bei der Betriebsfrequenz erreichbare Verbesserung der Isolation stark variieren kann.

Durch den Einsatz von Komponenten mit variablen Werten, wie beispielsweise Varaktordioden, kann eine gewisse Flexibilität bezüglich der Frequenzlage und der Kompensation eingeführt werden. Praktische Werte liegen hierbei um -35 dB.

Es gibt weiterhin wenige Ansätze, um eine Unterdrückung des Trägersignals im Empfangspfad vorzunehmen: Durch den Einsatz einer digitalen Signalverarbeitung beispielsweise durch DSPs (Digital Signal Processors) ist eine schmalbandige Unterdrückung von bis zu - 80 dB möglich. Weiterhin können bei diesem Ansatz frequenzselektive Filter mit unterschiedlichen Bandbreiten realisiert werden.

Nachteilig bei einer digitalen Signalverarbeitung ist einerseits der höhere Investitionsbedarf, sowohl für die Hardwareanschaffung als auch für die bei der Software-Erstellung benötigte Entwicklungszeit und die zugehörigen Kosten. Andererseits beansprucht die Hardware relativ viel Platz und ist, abhängig von den zu realisierenden Anforderungen, wesentlich langsamer als eine analoge Schaltung.

Eine weitere Möglichkeit zur Realisierung einer verbesserten Unterdrückung des Trägersignals im Empfangspfad wird in "System combining radio frequency transmitter and receiver using circulator and method for cancelling transmission signal thereof' (US Patent 6,567,648 B1) beschrieben. Hierbei wird eine Unterdrückung des Übersprechers dadurch realisiert, dass ein Teil des Empfangssignals ("Rx+Tx" in den Bildern 3 und 4) ausgekoppelt und in der Phase und Amplitude derart geändert wird, dass die Anteile des Trägersignals im ursprünglichen Empfangssignal und in diesem ausgekoppelten Signalpfad der gleichen Amplitude, jedoch um 180° in der Phase verschoben, zusammen geführt werden können. Hierbei wird eine Filterung des Rx-Signals notwendig (Komponente 24 in den Bildern 3 und 4), die aufgrund des geringen Frequenzversatzes zwischen dem Trägersignal und der Tag-Antwort beim Backscatter-Verfahren in RFID-Systemen nur durch eine digitale Signalverarbeitung realisierbar wäre.

Gemäß dem Stand der Technik kann allein durch den Einsatz einer digitalen Signalverarbeitung eine effektive Unterdrückung des Trägersignals für einzelne Kanäle vorgenommen werden. Die Anforderungen an einer Filterung eines einzelnen Betriebskanals sind so hoch (die relative Bandbreite bei UHF RFID beträgt beispielsweise 0,23 ‰), dass wiederum einzig eine digitale Signalverarbeitung eine zuverlässige Filterung eines einzigen Betriebskanals ermöglicht.

Zirkulatoren, Richtkoppler und variable Phasenschieber sind beschrieben in US 6,603,391 B1, WO 2006/088583 A2, US 2006/0098765 A1 beziehungsweise US 2008/0081551 A1.

Als eine **Aufgabe** der Erfindung kann angesehen werden, eine einstellbare Schaltung zum Filtern eines Übertragungskanals eines RFID-Signals und zum Unterdrücken eines Trägersignals im Empfangspfad zwischen einem Eingangstor und einem Ausgangstor zu schaffen, bei dem eine sehr gute Unterdrückung des Trägersignals mit kostengünstigen Mitteln möglich ist. Außerdem soll eine RFID-Readereinheit geschaffen werden, bei der das Trägersignal mit kostengünstigen Mitteln effektiv unterdrückt wird.

Diese Aufgabe wird erfindungsgemäß durch die einstellbare Schaltung mit den Merkmalen des Anspruchs 1 und durch eine RFID-Readereinheit gemäß Anspruch 13, bei welcher eine solche Schaltung eingesetzt wird, gelöst.

Bevorzugte Ausführungsbeispiele der erfindungsgemäßen Schaltung werden im Folgenden, insbesondere im Bezug auf die abhängigen Ansprüche und die Figuren, beschrieben.

Eine einstellbare Schaltung zum Filtern eines Übertragungskanals eines RFID-Signals und zum Unterdrücken eines Trägersignals im Empfangspfad zwischen einem Eingangstor und einem Ausgangstor weist erfindungsgemäß mindestens einen einstellbaren Oszillator zum Erzeugen eines Oszillatorsignals auf. Weiterhin ist mindestens eine mit dem Oszillator zusammenwirkende Eingangsmischerstufe zum Mischen eines Eingangssignals mit Hilfe des Oszillatorsignals auf eine Zwischenfrequenz vorhanden. Schließlich weist die erfindungsgemäße Schaltung eine der Eingangsmischerstufe oder den Eingangsmischerstufen nachgeordnete Sperreinrichtung zum Unterdrücken des Trägersignals bei der Zwischenfrequenz auf.

Als ein erster Kerngedanke der Erfindung kann angesehen werden, zum Unterdrükken eines Trägersignals bei einer RFID-Einrichtung mit kostengünstigen Mitteln, nicht mehr, wie im Stand der Technik, Komponenten vorzusehen, welche für eine bestimmte Frequenz eingerichtet sind, sondern eine prinzipiell einstellbare Schaltung vorzusehen. Auf diese Weise wird eine deutlich erhöhte Flexibilität erreicht.

Als weiterer Kerngedanke der Erfindung kann erachtet werden, einer insbesondere qualitativ hochwertigen Sperreinrichtung zum Unterdrücken eines Trägersignals eine Eingangsmischerstufe vorzuordnen, mit welcher ein Eingangssignal einstellbar auf eine Zwischenfrequenz gemischt werden kann. Ein wesentlicher Vorteil ist dabei, dass durch die qualitativ hochwertige Sperreinrichtung eine besonders gute Unterdrückung des Trägersignals erreicht wird und dass außerdem die Zwischenfrequenz mit Hilfe des einstellbaren Oszillators und der Eingangsmischerstufe geeignet und passend auf die Sperreinrichtung abstimmbar ist.

Bei einer besonders bevorzugten Ausführungsvariante der erfindungsgemäßen Schaltung weist die Sperreinrichtung ein, insbesondere hochgütiges, Bandsperrfilter auf.

Diesem Bandsperrfilter kann gemäß einer weiteren vorteilhaften Variante zum Filtern des Übertragungskanals bei der Zwischenfrequenz ein Bandpassfilter vor- oder nachgeordnet sein. Hierbei sind der Bandpassfilter und der Bandsperrfilter zweckmäßig aufeinander abgestimmt.

Prinzipiell können auch mehrere Bandpassfilter vorhanden sein, zwischen denen hin-und hergeschaltet werden kann. Ebenso ist möglich, eine Mehrzahl von Bandsperrfiltern und zugeordneten Bandpassfiltern vorzusehen, wobei zwischen den einzelnen Paaren umgeschaltet werden kann.

Grundsätzlich kann das durch die Sperreinrichtung, also beispielsweise durch den Bandsperrfilter, gefilterte Signal bei der Zwischenfrequenz ausgewertet werden. Um jedoch auf kommerziell erhältliche Komponenten zur Auswertung der von den RFID-Tags gesendeten Informationen zurückgreifen zu können, ist es bevorzugt, das Ausgangssignal auf eine definierte Frequenz zu setzen. Hierzu ist bevorzugt dem Bandsperrfilter mindestens eine Ausgangsmischerstufe nachgeordnet.

Bei einer weiteren Variante der erfindungsgemäßen Schaltung weist die Sperreinrichtung ergänzend oder alternativ zu dem Bandsperrfilter ein erstes Bandpassfilter zum Filtern eines ersten Seitenbands des Eingangssignals und ein zweites Bandpassfilter zum Filtern eines zweiten Seitenbands des Eingangssignals auf. Zweckmäßig ist hierzu ein Leistungsteiler vorhanden zum Teilen eines Eingangssignals zwischen einem ersten Pfad und einem zweiten Pfad.

Eine vorteilhafte Weiterentwicklung dieser Variante ist dadurch gekennzeichnet, dass ein Leistungsteiler vorhanden ist zum Teilen eines Eingangssignals zwischen einem ersten Pfad und einem zweiten Pfad, dass mindestens ein erster einstellbarer Oszillator vorhanden ist zum Erzeugen eines ersten Oszillatorsignals, dass im ersten Pfad eine mit dem ersten Oszillator zusammenwirkende erste Eingangsmischerstufe vorhanden ist zum Mischen des Eingangssignals mit Hilfe des ersten Oszillatorsignals auf eine erste Zwischenfrequenz, dass der ersten Eingangsmischerstufe der erste Bandpassfilter zum Filtern des ersten Seitenbands des Eingangssignals bei der ersten Zwischenfrequenz nachgeordnet ist, dass im zweiten Pfad eine mit dem ersten Oszillator oder einem zweiten Oszillator zusammenwirkende zweite Eingangsmischerstufe vorhanden ist zum Mischen des Eingangssignals mit Hilfe des Oszillatorsignals auf eine zweite Zwischenfrequenz und dass der zweiten Eingangsmischerstufe der zweite Bandpassfilter zum Filtern des zweiten Seitenbands des Eingangssignals bei der zweiten Zwischenfrequenz nachgeordnet ist. Auf ein hochgütiges Bandsperrfilter kann dann prinzipiell verzichtet werden.

Um auch bei dieser Variante möglichst auf kommerziell erhältliche Komponenten zum Auswerten des von dem RFID-Tag zurückgesandten Signals zurückgreifen zu können, ist auch hier zweckmäßig, wenn dem ersten Bandpassfilter eine erste Ausgangsmischerstufe nachgeordnet ist und dem zweiten Bandpassfilter eine zweite Ausgangsmischerstufe nachgeordnet ist.

Grundsätzlich können das erste Bandpassfilter und das zweite Bandpassfilter so aufeinander abgestimmt werden, dass sie die entsprechenden Seitenbänder des Signals anforderungsgemäß durchlassen, das Trägersignal jedoch abblocken. Der Einsatz der einstellbaren Oszillatoren und der Eingangsmischerstufen ermöglicht jedoch auch als weitere vorteilhafte Variante, dass das erste Bandpassfilter und das zweite Bandpassfilter baugleiche Komponenten sind, wobei hierzu die entsprechenden Oszillatorfrequenzen geeignet eingestellt werden müssen.

Grundsätzlich kommt es bei den Eingangsmischerstufen und den Ausgangsmischerstufen nur darauf an, dass die jeweiligen Zwischenfrequenzen auf die Filterkomponenten, also beispielsweise das Bandsperrfilter und die Bandpassfilter, beziehungsweise auf eine nachgeordnete Auswerteschaltung abgestimmt sind. Im Hinblick auf kommerziell erhältliche Komponenten sind jedoch Ausführungsvarianten bevorzugt, bei denen die Eingangsmischerstufen Abwärtsmischerstufen sind und/oder die Ausgangsmischerstufen Aufwärtsmischerstufen sind.

Um für die letztendlich auszuwertenden Seitenbänder des RFID-Signals eine gewünschte Intensität zu erreichen, kann zwischen der Eingangsmischerstufe oder den Eingangsmischerstufen und der Sperreinrichtung mindestens ein verstärkendes Element, insbesondere mindestens ein separater Verstärker, vorhanden sein.

Prinzipiell können auch in dem Bandsperrfilter und/oder den Bandpassfiltern verstärkende Stufen vorhanden sein.

Um die Intensität des Trägersignals bereits vor Eintritt in die Verstärkerstufen zu reduzieren, sind außerdem Weiterbildungen der erfindungsgemäßen Schaltung bevorzugt, bei der vor den verstärkenden Elementen, insbesondere vor den separaten Verstärkern, jeweils mindestens ein Eingangsfilter, insbesondere mindestens ein Quarz, zum Herausfiltern des Trägersignals, vorhanden ist. Beispielsweise sind bei einer bevorzugten Variante drei Quarze hintereinander geschaltet.

Eine besonders große Variabilität der jeweils einstellbaren Zwischenfrequenzen wird erreicht, wenn jede Mischerstufe mit einem separaten einstellbaren Oszillator verbunden ist.

Bei einer bevorzugten Ausführungsvariante der Erfindung wirkt aber die Ausgangsmischerstufe oder wirken die Ausgangsmischerstufen mit demselben Oszillator zusammen, wie die in demselben Pfad angeordnete Eingangsmischerstufe oder Eingangsmischerstufen.

Ein weiterer wichtiger Aspekt bei der Dimensionierung eines Sende-/ Empfangssystems ist die Berechnung der Eingangsrauschleistung N, die direkt proportional zur Systembandbreite $\Delta f$ ist. Bei kommerziell verfügbaren Systemen werden in der Regel akustische Oberflächenfilter (SAW-Filter) eingesetzt, die das Betriebsband durchlassen.

Durch den Einsatz der in dieser Schrift beschriebenen Erfindung kann die effektive Filter-Bandbreite von der Bandbreite des Betriebskanals auf die effektive KanalBandbreite reduziert werden. Hierdurch kann die Eingangsrauschleitung um einen Faktor zwischen 10 und 100 für jeweils RFID-Systeme bei 868 MHz bzw. 2,45 GHz reduziert werden.

Die Reduzierung der Filterbandbreite vom SAW-Filter fürs Betriebsband auf das frequenzselektive Kanalfilter resultiert in eine Verbesserung der Eingangsrauschleitung um einen Faktor zwischen 10 und 100, abhängig davon, ob das RFID-System bei 868 MHz oder bei 2,45 GHz mit einem jeweiligen Kanalbandbreite von bis zu 500 kHz arbeitet.

Durch den Einsatz des Kanalfilters höchster Güte fürs Betriebsband reduziert sich die Eingangsrauschleistung des Empfängers proportional zum Verhältnis zwischen dem gemäß dem Stand der Technik eingesetzten SAW-Filter fürs Betriebsband und der Bandbreite des Betriebskanals gemäß dieser Erfindung. Bei RFID-Systemen für den UHF-Bereich beträgt das Betriebsband beispielsweise 3 MHz in Europa und 28 MHz in den USA, während die Bandbreite eines Betriebskanals jeweils 200 kHz bzw. 500 kHz beträgt, so dass hierbei eine Verbesserung der Eingangsrauschleistung und damit der Systemdynamik um einen Faktor 15 bzw. 56 zu erzielen ist.

Durch den Einsatz des hier beschriebenen elektrischen Kanalfilters kann zusätzlich zu den bekannten Möglichkeiten zur Unterdrückung des Übersprechers zwischen dem Sende- und dem Empfangspfad eine frequenzselektive Unterdrückung des Trägersignals im Empfangspfad erreicht werden. Praktische Werte hierfür liegen bei über 40 dB, was zu einer mehr als achtfachen Erhöhung der Reichweite eines RFID-Systems nach dem Backscatter-Verfahren führen kann.

Aufgrund der Frequenzselektivität der Erfindung ist es möglich, Systeme mit einem Multikanal-Betrieb zu bedienen, bzw. die Betriebsfrequenz eines Systems mit einem einzelnen Betriebskanal dynamisch zu variieren, um den Frequenzversatz zu Störern und/oder benachbarten Systemen möglichst groß zu halten.

Die Erfindung kann mit kommerziell verfügbaren Komponenten realisiert werden und ist im Hinblick auf preisliche und personelle Investitionen wesentlich günstiger als eine Realisierung mittels digitaler Signalverarbeitung. Nur mit einer unproportionalen hohen Investition in der Rechenleistung ist beispielsweise bei einer frequenzselektiven Filterung durch eine digitale Signalverarbeitung eine Reaktionszeit in einer vergleichbaren Größenordnung möglich wie bei dem hier beschriebenen elektrischen Kanalfilter.

Gemäß einer bevorzugten Weiterbildung der Erfindung ist eine Kompensationsschaltung zur Unterdrückung des Übersprechers zwischen einem Sendepfad und einem Empfangspfad der RFID-Readereinheit vorgesehen, mit einer Einrichtung zur Auskopplung eines Signalanteils eines Trägersignals aus dem Sendepfad in einen Kompensationspfad, wobei der Kompensationspfad mindestens einen variablen Phasenschieber und mindestens ein variables Dämpfungsglied zum Variieren des Signalanteils in der Phase beziehungsweise in der Amplitude aufweist, einer Einrichtung zur Einkopplung des in der Phase und in der Amplitude variierten Signalanteils aus dem Kompensationspfad auf den Empfangspfad, einer Einheit zur Bestimmung des im Empfangspfad vorhandenen Übersprechers, sowie einer Steuereinheit für den variablen Phasenschieber und das variable Dämpfungsglied, welche mit der Einheit zur Bestimmung des vorhandenen Übersprechers in Signalverbindung steht.

Mit dieser Kompensationsschaltung für die RFID-Readereinheit kann beim Backscatter-Verfahren in RFID-Systemen in besonders einfacher, vielseitiger, zuverlässiger und effektiver Weise die Unterdrückung des Übersprechers, d.h. des Crosstalk, des Trägersignals auf den Empfangspfad verbessert werden, so dass eine höhere System-Dynamik ermöglicht wird, was in einer höheren Reichweite bzw. in einer niedrigeren Bit Error Rate bei gleicher Entfernung zwischen der Readereinheit und dem Tag resultiert.

Der Kompensationspfad zweigt erfindungsgemäß an der Einrichtung zur Auskopplung vom Sendepfad ab und mündet an der Einrichtung zur Einkopplung in den Empfangspfad ein. Die Einheit zur Bestimmung des vorhandenen Übersprechers ist ebenfalls am Empfangspfad vorgesehen. Der variable Phasenschieber ist zweckmäßigerweise dem variablen Dämpfungsglied vorgeschaltet, d.h. näher am Sendepfad angeordnet als das Dämpfungsglied.

Die Steuereinheit kann erfindungsgemäß so eingerichtet sein, dass sie den variablen Phasenschieber und das variable Dämpfungsglied in Abhängigkeit vom vorhandenen Übersprecher, aber vorzugsweise auch in Abhängigkeit vom Trägersignal, beispielsweise seiner Frequenz, steuert. Insbesondere kann die Steuereinheit den variablen Phasenschieber und das variable Dämpfungsglied so steuern, dass der vorhandene Übersprecher minimal wird. Die Einheit zur Bestimmung des im Empfangspfad vorhandenen Übersprechers weist zweckmäßigerweise einen Detektor auf.

Durch den Einsatz der in dieser Schrift beschriebenen elektrischen Kompensationsschaltung kann eine frequenzselektive Unterdrückung des Übersprechers zwischen dem Sende- und dem Empfangspfad eines Systems über einen Zirkulator oder über zwei Antennen erreicht werden, die zu einer Erhöhung der Systemdynamik und einer verbesserten Unterdrückung bzw. Isolation führen kann. Realisierbare Werte für die Verbesserung der Isolation liegen bei über 50 dB.

Durch die frequenzselektive Unterdrückung des Übersprechers kann diese Schaltung bei Systemen mit mehreren Übertragungskanälen eingesetzt werden.

Die erfindungsgemäße Kompensationsschaltung setzt eine analoge und dynamische Anpassung der übertragungseigenschaften eines parallelen Übertragungspfads mittels der Steuereinheit ein, wodurch eine Unabhängigkeit sowohl von Fertigungstoleranzen als auch von diskreten Werten der unter Umständen eingesetzten SMD-Komponenten erreicht werden kann.

Durch die dynamische, zwischen einzelnen Lesevorgängen durchführbare Anpassung des Kompensationspfads kann eine schnelle Kompensation erreicht werden, wodurch es möglich wird, umweltbedingte Einflüsse, wie beispielsweise größere reflektierende Flächen in der Nähe des Systems oder des Tags, dynamisch während des Betriebs auszugleichen.

Die Kompensationsschaltung kann auch zur Verbesserung der Isolation zwischen den Sende- und Empfangsantennen einer Anordnung mit zwei oder mehr Antennen eingesetzt werden.

Ein weiterer wesentlicher Vorteil der beschriebenen Schaltung besteht in der verbesserten Rauscheigenschaft des Empfängers, die darauf beruht, dass bei der Unterdrückung des Trägersignals auch das durch dieses starke Signal verursachte Rauschen im gleichen Maße unterdrückt wird.

In besonders einfacher Weise können der Sendepfad und der Empfangspfad über einen Zirkulator mit einer gemeinsamen Antenne gekoppelt sein. Demgemäß ist es vorteilhaft, dass zwischen dem Sendepfad und dem Empfangspfad ein Zirkulator vorgesehen ist, welcher zu mindestens einer Sende-/Empfangsantenne führt, wobei der Sendepfad zwischen einem Sendeanschluss und dem Zirkulator und der Empfangspfad zwischen dem Zirkulator und einem Empfangsanschluss gegeben ist.

Bei einer weiteren besonders bevorzugten Ausgestaltung der Erfindung können der Sendepfad und der Empfangspfad über einen Richtkoppler mit einer gemeinsamen Antenne gekoppelt sein. Demgemäß ist es vorteilhaft, dass zwischen dem Sendepfad und dem Empfangspfad ein Richtkoppler vorgesehen ist, welcher zu mindestens einer Sende-/Empfangsantenne führt, wobei der Sendepfad zwischen einem Sendeanschluss und dem Richtkoppler und der Empfangspfad zwischen dem Richtkoppler und einem Empfangsanschluss gegeben ist.

Alternativ kann auch eine Anordnung mit zwei Antennen vorgesehen sein, was den Übersprecher weiter reduzieren kann. Demgemäß ist es erfindungsgemäß, dass am Sendepfad mindestens eine Sendeantenne und am Empfangspfad mindestens eine Empfangsantenne vorgesehen ist, wobei der Sendepfad zwischen einem Sendeanschluss und der Sendeantenne und der Empfangspfad zwischen der Empfangsantenne und einem Empfangsanschluss gegeben ist.

Im Hinblick auf den Schaltungsaufwand besonders bevorzugt ist es, dass die Einrichtung zur Auskopplung eines Signalanteils, insbesondere mit einer definierten Leistung, ein Koppler oder unsymmetrischer Leistungsteiler ist, und/oder dass die Einrichtung zur Einkopplung des in der Phase und in der Amplitude variierten Signalanteils ein Koppler oder unsymmetrischer Leistungsteiler ist.

Weiterhin ist es bevorzugt, dass die Einheit zur Bestimmung des im Empfangspfad vorhandenen Übersprechers einen weiteren Koppler oder unsymmetrischen Leistungsteiler und/oder einen Leistungsdetektor aufweist. Zweckmäßigerweise ist die Einheit zur Bestimmung des vorhandenen Übersprechers, insbesondere ihr Koppler oder unsymmetrischer Leistungsteiler, am Empfangspfad angeordnet, und zwar vorzugsweise zwischen der Einrichtung zur Einkopplung des in der Phase und in der Amplitude variierten Signalanteils und dem Empfangsanschluss.

Der Herstellungsaufwand kann weiter dadurch reduziert werden, dass zumindest einer der Koppler oder unsymmetrischen Leistungsteiler durch gekoppelte Leitungen oder den Einsatz von SMD-Komponenten aufgebaut ist.

Insbesondere zur noch besseren Unterdrükkung von Übersprechern bei niedrigem Herstellungsaufwand kann vorgesehen sein, dass im Kompensationspfad mindestens ein fester Phasenschieber und/oder mindestens ein festes Dämpfungsglied angeordnet ist. Diese festen Elemente können zur Anpassung der Phase bzw. der Amplitude des ausgekoppelten Signalanteils an den Dynamikbereich des variablen Phasenschiebers und/oder des variablen Dämpfungsglieds dienen. Die festen Module sind zweckmäßigerweise den variablen Modulen vorgeschaltet, d.h. sie sind zwischen der Einrichtung zur Auskopplung des Signalanteils und den variablen Modulen im Kompensationspfad angeordnet.

Weiterhin ist es zweckmäßig, dass im Kompensationspfad mindestens eine Verstärkereinheit angeordnet ist. Diese Verstärkereinheit kann dazu dienen, Änderungen in der Amplitude des ausgekoppelten Trägersignals, die beispielsweise durch die Koppelfaktoren der Koppler entstehen, zu kompensieren. Die Verstärkereinheit ist zweckmäßigerweise zwischen den variablen Elementen und der Einrichtung zur Einkopplung des in der Phase und in der Amplitude variierten Signalanteils im Kompensationspfad angeordnet. Die Steuereinheit dient vorzugsweise auch zum Steuern der Verstärkereinheit im Kompensationspfad.

Eine weitere vorteilhafte Ausgestaltung der Erfindung besteht darin, dass eine Verstärkereinheit, optional mit einer integrierten Regulierung der Verstärkung (Automatic Gain Control), vor dem Leistungsdetektor eingesetzt wird. Hierdurch kann der dynamische Messbereich des Leistungsdetektors erhöht werden. Diese Verstärkereinheit ist Teil der Einheit zur Bestimmung des vorhandenen Übersprechers und/oder ist zwischen dem Koppler bzw. Leistungsteiler dieser Einheit und dem Leistungsdetektor dieser Einheit angeordnet.

Zweckmäßigerweise ist der Leistungsdetektor durch eine integrierte Halbleiterschaltung (so genannter Integrated Circuit, IC) gebildet.

Besonders vorteilhaft ist es, dass die Steuereinheit so eingerichtet ist, dass sie den Kompensationspfad, das heißt insbesondere den variablen Phasenschieber und das variable Dämpfungselement, gegebenenfalls auch die Verstärkereinheit des Kompensationspfades, zwischen einzelnen Lesevorgängen der RFID-Readereinheit anpasst. Eine weitere Ausgestaltung der Erfindung liegt darin, dass die Steuereinheit so eingerichtet ist, dass der variable Phasenschieber und das variable Dämpfungsglied unter-schiedliche Kombinationen von Dämpfungs- und Phasenwerten iterativ durchlaufen, wobei nach einem Durchlauf der Wertebereich von Dämpfung und Phase um einen im Durchlauf ermittelten besten Wert für den Übersprecher eingeschränkt wird und/oder eine Diskretisierung der Dämpfungs- und Phasenwerte verfeinert wird.

Die Erfindung betrifft auch eine RFID-Readereinheit mit einer erfindungsgemäßen Kompensationsschaltung. Grundsätzlich kann die erfindungsgemäße Kompensationsschaltung aber auch in anderen Sender/ Empfängerschaltungen zum Einsatz kommen.

In dieser Anmeldung wird ein dynamisches Anpassnetzwerk zum Einsatz in RFID-Systemen, insbesondere mit elektrischem Zirkulator, zur Erzeugung einer frequenzselektiven Unterdrückung des Übersprechers, der über den Zirkulator entsteht, beschrieben. Diese frequenzselektive Unterdrückung des Übersprechers führt dazu, dass die im Frequenzspektrum um das Trägersignai iiegenden Seitenbänder, die die Tag-Antwort beinhalten, nicht mehr durch den starken Übersprecher überschattet werden, was wiederum zu einer Erhöhung der Systemdynamik um die zusätzlich erreichte Unterdrükkung führt. Diese zusätzlich erreichte Systemdynamik resultiert ihrerseits in einer erhöhten Reichweite oder alternativ in einem verbesserten Signal-Rausch-Abstand (oder einer niedrigeren Bit Error Rate) bei gleicher Reichweite.

Die frequenzselektive Unterdrückung erfolgt durch eine destruktive Überlagerung des Übersprechers mit einem ausgekoppelten Anteil des Sendesignals, dessen Amplitude und Phase über

    ☐ feste und/oder variable Phasenschieber,

    ☐ feste und/oder variable Dämpfungsglieder

    ☐ sowie eine optionale Verstärkereinheit

für die Betriebsfrequenz einzustellen ist. Die Realisierung der für die Ein- und Auskopplung des Kompensationssignals notwendigen Koppelelemente kann sowohl durch konzentrierte als auch durch verteilte Elemente erfolgen. Durch den Einsatz eines optionalen, über einen Koppler bzw. einen unsymmetrischen Leistungsteiler angeschlossenen Leistungsdetektors kann das Maß an Unterdrückung ermittelt und als Eingangswert einer Steuereinheit eingesetzt werden.

Die Kompensationsschaltung kann außer zum Ausgleichen des über den Zirkulator entstehenden Übersprechers zwischen dem Sende- und dem Empfangspfad auch zum Ausgleichen von Umwelteinflüssen auf die Antenneneingangsreflexion eingesetzt werden, die beispielsweise durch größere, stark reflektierende Oberflächen in der Nähe der Betriebseinheit entstehen, und die ebenfalls zu einer Einschränkung der Systemdynamik führen können.

Die Kompensationsschaltung kann auch in Systemen eingesetzt werden, in denen zwei getrennte Antennen zum Senden und Empfangen verwendet werden.

Nach der Erfindung kann eine Kompensationsschaltung zur Unterdrückung des Übersprechers zwischen dem Sendeanschluss und dem Empfangsanschluss über einen zu mindestens einer Sende/Empfangsantenne führenden Zirkulator vorgesehen sein, bestehend aus einem Koppler oder unsymmetrischen Leistungsteiler zur Auskopplung einer definierten Leistung des Trägersignals zwischen dem Sendeanschluss und dem Zirkulator, einem Kompensationspfad, bestehend aus mindestens einem variablen Phasenschieber und einem variablen Dämpfungsglied, einem Koppler oder unsymmetrischen Leistungssteiler zur Einkopplung des im Kompensationspfad in Amplitude und Phase variierten Signalanteils vom Trägersignal auf den Pfad zwischen dem Zirkulator und dem Empfangsanschluss, einer Einheit zur Bestimmung des vorhandenen Übersprechers, die aus einem weiteren Koppler oder unsymmetrischen Leistungssteiler und einem Leistungsdetektor bestehen kann, sowie einer Steuereinheit.

Nach der Erfindung kann ferner eine Kompensationsschaltung zur Unterdrückung des Übersprechers zwischen dem Sendeanschluss und dem Empfangsanschluss über mindestens einer Sendeantenne und mindestens einer Empfangsantenne vorgesehen sein, bestehend aus einem Koppler oder unsymmetrischen Leistungssteiler zur Auskopplung einer definierten Leistung des Trägersignals zwischen dem Sendeanschluss und der Sendeantenne, einem Kompensationspfad bestehend aus mindestens einem variablen Phasenschieber und einem variablen Dämpfungsglied, einem Koppler oder unsymmetrischen Leistungssteiler zur Einkopplung des im Kompensationspfad in Amplitude und Phase variierten Signalanteils vom Trägersignal auf den Pfad zwischen der Empfangsantenne und dem Empfangsanschluss, einer Einheit zur Bestimmung des vorhandenen Übersprechers, die aus einem weiteren Koppler oder unsymmetrischen Leistungssteiler und einem Leistungsdetektor bestehen kann, sowie einer Steuereinheit.

Ein weiterer Erfindungsgedanke liegt darin, dass die Koppler oder unsymmetrischen Leistungssteiler durch gekoppelten Leitungen oder den Einsatz von SMD-Komponenten aufgebaut werden.

Ferner ist es erfindungsgemäß, dass im Kompensationspfad mindestens ein fester Phasenschieber und/oder ein festes Dämpfungsglied zur Anpassung der Phase bzw. der Amplitude des ausgekoppelten Trägersignals an den Dynamikbereich des variablen Phasenschiebers bzw. des variablen Dämpfungsglieds eingesetzt wird.

Ein weiterer Erfindungsaspekt liegt darin, dass im Kompensationspfad eine Verstärkereinheit eingesetzt wird, um die Änderungen in der Amplitude des ausgekoppelten Trägersignals, die beispielsweise durch die Koppelfaktoren der Koppler entstehen, zu kompensieren.

Bei einer erfindungsgemäßen Kompensationsschaltung zur Unterdrückung des Übersprechers zwischen dem Sendeanschluss und dem Empfangsanschluss kann überdies eine Verstärkereinheit, optional mit einer integrierten Regulierung der Verstärkung (Automatic Gain Control), vor dem Leistungsdetektor eingesetzt werden, um den dynamischen Messbereich des Detektors zu erhöhen. Überdies kann der Detektor durch eine integrierte Halbleiterschaltung (so genanntes Integrated Circuits, IC) ersetzt werden.

Die Kombination eines variablen Dämpfungsglieds und einem Verstärker kann auch in einer einfachen Variante durch einen Verstärker mit variabler Verstärkung verwirklicht werden.

Weitere Vorteile und Merkmale der Erfindung werden nachstehend mit Bezug auf die beigefügten schematischen Figuren beschrieben. Hierin zeigt:

Fig. 1     einen Zirkulator, wie er bevorzugt zusammen mit der erfindungs- gemäßen Schaltung zum Einsatz kommt;

Fig. 2     ein erstes Ausführungsbeispiel einer erfindungsgemäßen Schal- tung;

Fig. 3     ein zweites Ausführungsbeispiel einer erfindungsgemäßen Schal- tung;

Fig. 4     die Architektur einer erfindungsgemäßen elektrischen Kompensa- tionsschaltung bestehend aus Koppelelementen, festen und varia- blen Phasenschiebern sowie Dämpfungsgliedern, einer Verstär- kereinheit, einem Detektor zur Messung des gesamten Überspre- chers sowie einer zentralen Steuereinheit zur Unterdrük- kung des Übersprechers vom Sendesignal über einen Zirkulator und der Sende-/ Empfangsantenne auf den Empfangspfad;

Fig. 5     die Architektur einer erfindungsgemäßen elektrischen Kompensa- tionsschaltung bestehend aus Koppelelementen, festen und varia- blen Phasenschiebern sowie Dämpfungsgliedern, einer Verstär- kereinheit, einem Detektor zur Messung des gesamten Überspre- chers sowie einer zentralen Steuereinheit zur Unterdrük- kung des Übersprechers zwischen einer Sendeantenne und einer Emp- fangsantenne auf den Empfangspfad;

Fig. 6     eine Teilansicht einer Architektur eines alternativen Ausführungs- beispiels der Erfindung unter Einsatz eines Richtkopplers; und

Fig. 7     in schematischer Ansicht ein Ausführungsbeispiel einer erfin- dungsgemäßen RFID-Readereinheit.

Fig. 1 zeigt eine schematische Darstellung einer Schaltung gemäß dem Stand der Technik zur Realisierung einer Sende-/Empfangsstrecke für einen beim Backscatter-Verfahren notwendigen Duplexbetrieb unter Einsatz eines Zirkulators. Die dort dargestellte Readeranordnung weist einen Sendeanschluss 10, eine Antenne 14, einen Empfangsanschluss 12 und einen Zirkulator 16 auf, der zwischen Sendeanschluss 10 und Empfangsanschluss 12 angeordnet ist.

In Fig. 2 ist eine elektrisch verstimmbare Schaltung 300 dargestellt zur Filterung eines Übertragungskanals von einem RFID-Signal mit Unterdrückung des Trägersignals im Empfangspfad zwischen dem Eingangstor 310 und dem Ausgangstor 312 bestehend aus

a. mindestens einem Oszillator 314 zur Erzeugung eines für die Mischvorgänge benötigten Signals,

b. mindestens einem Leistungsteiler 316 zur Teilung des Oszillatorsignals,

c. mindestens zwei Mischerstufen 318 und 320, wobei die Abwärtsmischerstufe 318 das Eingangssignal auf eine Zwischenfrequenz untermischt und die Aufwärtsmischerstufe 320 das gefilterte Signal von der Zwischenfrequenz auf die ursprüngliche Frequenzlage aufmischt,

d. einem Bandsperrfilter 322 mit höchster Güte zur Unterdrückung des Trägersignals bei der Zwischenfrequenz,

e. einem Bandpassfilter 324 mit höchster Güte zur Filterung des Betriebskanals bei der Zwischenfrequenz

f. sowie einer optionalen rauscharmen Verstärkerstufe 326, die die Kettenrauschzahl der Schaltung verbessert und die bei den Mischvorgängen entstehenden Konversionsverluste kompensiert, wobei die Reihenfolge der Filterungen durch das Bandsperrfilter 322 und das Bandpassfilter 324 vertauschbar sind.

Auf die Versorgung der zweiten Mischerstufe durch den Oszillator 314 über den Signalteiler 316 kann verzichtet werden oder diese kann durch einen zweiten Oszillator ersetzt werden.

Fig. 2 zeigt schematisch den Aufbau einer Ausführungsform des elektrisch verstimmbaren Kanalfilters gemäß der Erfindung. Diese beinhaltet als wesentliche Bestandteile mindestens einen einstellbaren Oszillator 314, mindestens einen Signalteiler 316 und mindestens zwei Mischerstufen 318 und 320. Das Eingangssignal vom Eingangsanschluss 310 wird mit einem Oszillatorsignal des einstellbaren Oszillators 314 an einer Abwärtsmischerstufe 318 zur Verarbeitung auf eine Zwischenfrequenz heruntergemischt und an der Aufwärtsmischerstufe 320 auf die Betriebsfrequenz wieder heraufgemischt. Bei der Zwischenfrequenz wird das Trägersignal durch ein hochgütiges Bandsperrfilter 322 unterdrückt und der jeweilige Betriebskanal durch ein Bandpassfilter 324 gefiltert. Optional kann eine Verstärkung des Signals durch eine Verstärkerstufe 326 durchgeführt werden.

Das eingesetzte Bandsperrfilter 322 und das Bandpassfilter 324 weisen feste Frequenzen auf. Die Aufgabe der Mischstufen besteht darin, die einzelnen Betriebskanäle auf die Zwischenfrequenz unterzumischen und die gefilterten Signale von der Zwischenfrequenz wieder auf die ursprüngliche Frequenzlage aufzumischen.

Die Reihenfolge der Filterungen und der Verstärkung ist grundsätzlich vertauschbar. Es ist jedoch empfehlenswert, die Verstärkung durch einen rauscharmen Verstärker gemäß FIG. 2 vorzuziehen, da hierdurch die resultierende Kettenrauschzahl reduziert und somit das Signal-Rausch-Verhältnis verbessert wird.

Eine weitere Ausgestaltung der Erfindung besteht darin, auf die zweite Mischstufe zu verzichten und die weitere Auswertung der Tag-Antwort bei der Zwischenfrequenz durchzuführen.

Weiterhin ist es möglich, ein zweites Oszillatorsignal an die zweite Mischstufe zu führen, um das Signal am Ausgang der Schaltung auf eine weitere, beliebige Zwischenfrequenz zu mischen. Die weitere Auswertung der Tag-Antwort kann dann auf dieser zweiten Zwischenfrequenz vorgenommen werden.

Fig. 3 zeigt in einer vereinfachten Abbildung eine alternative Realisierung einer erfindungsgemäßen elektrisch verstimmbaren Schaltung zur Filterung eines Übertragungskanals von einem RFID-Signal mit Unterdrückung des Trägersignals im Empfangspfad zwischen dem Eingangstor 410 und dem Ausgangstor 412, realisiert durch das Filtern der zwei Seitenbänder der Tag-Antwort um das Trägersignal durch zwei Bandpassfilter bei einer Zwischenfrequenz, bestehend aus

a. mindestens einem Leistungsteiler 430 zur Teilung der Eingangsleistung zwischen den zwei Pfaden zur Filtern der einzelnen Seitenbänder,

b. mindestens einem Oszillator 414 zur Erzeugung eines für die Mischvorgänge bei dem ersten (beispielsweise oberen) Seitenband benötigten Signals,

c. mindestens einem Leistungsteiler 438 zur Teilung des Oszillatorsignals vom Oszillator 414 zwischen den Mischerstufen für das erste (beispielsweise obere) Seitenband,

d. mindestens zwei Mischerstufen 418 und 426 zur Versetzung des ersten Signalanteils auf die Zwischenfrequenz und zurück in die Frequenzlage des Eingangssignals,

e. mindestens einem Bandpassfilter 422 höchster Güte um das erste (beispielsweise obere) Seitenband zu filtern,

f. einer optionalen rauscharmen Verstärkerstufe 434 zur Reduzierung der Kettenrauschzahl der Schaltung sowie zur Kompensation der bei den Mischvorgängen entstehenden Konversionsverluste bei der Verarbeitung des ersten (beispielsweise oberen) Seitenbands,

g. mindestens einem Oszillator 416 zur Erzeugung eines für die Mischvorgängen bei dem zweiten (beispielsweise unteren) Seitenband benötigten Signals,

h. mindestens einem Leistungsteiler 440 zur Teilung des Oszillatorsignals vom Oszillator 416 zwischen den Mischerstufen für das zweite (beispielsweise untere) Seitenband,

i. mindestens zwei Mischerstufen 420 und 428 zur Versetzung des zweiten Signalanteils auf die Zwischenfrequenz und zurück in die Frequenzlage des Eingangssignals,

j. mindestens einem Bandpassfilter 424 höchster Güte um das zweite (beispielsweise untere) Seitenband zufiltern,

k. einer optionalen rauscharmen Verstärkerstufe 436 zur Reduzierung der Kettenrauschzahl der Schaltung sowie zur Kompensation der bei den Mischvorgängen entstehenden Konversionsverluste bei der Verarbeitung des zweiten (beispielsweise unteren) Seitenbands

l. sowie mindestens einem Leistungsteiler 432, der die zwei gefilterten Seitenbänder, die sich bei der Frequenzlage des Eingangssignals befinden, zusammenführt.

Bei dem in Fig. 3 gezeigten Ausführungsbeispiel kann entweder auf die Versorgungen der zweiten Mischerstufen der jeweiligen Signalpfade durch die Oszillatoren 414 und 416 über die Signalteiler 438 und 440 verzichtet werden oder diese können durch jeweils weitere Oszillatoren ersetzt werden.

Bei der in Fig. 3 dargestellten Variante erfolgt eine getrennte Filterung der zwei Seitenbänder der Tag-Antwort zwischen dem Eingangstor 410 und dem Ausgangstor 412. Hierfür wird das Eingangssignal über mindestens einen Signalteiler 430 zwischen den zwei Signalpfaden geteilt. Das bei einer Abwärtsmischstufe 418 und einer Aufwärtsmischstufe 426 für die Mischung notwendige Oszillatorsignal im ersten Signalpfad, in dem beispielsweise das untere Seitenband gefiltert werden kann, wird durch einen Oszillator 414 über einen Signalteiler 438 zur Verfügung gestellt. Die Filterung des ersten Seitenbands erfolgt durch das hochgütige Bandpassfilter 422, wobei der Signalpegel optional durch eine (rauscharme) Verstärkerstufe 434 angehoben werden kann.

Nach dem gleichen Prinzip erfolgt auf dem zweiten Signalpfad eine Filterung des zweiten Seitenbands durch das hochgütige Filter 424 mit einer optionalen Verstärkung durch eine (rauscharmen) Verstärkerstufe 436. Das bei der Abwärtsmischstufe 420 und der Aufwärtsmischstufe 428 benötigte Oszillatorsignal wird durch einen Oszillator 416 über einen Signalteiler 440 erzeugt. Durch das Zusammenführen der zwei gefilterten Seitenbänder aus den zwei Signalpfaden an einem Signalteiler 432 entsteht ein Signal, das wesentlich aus den zwei Seitenbändern, bzw. der Tag-Antwort, besteht.

Bei dieser Ausführung können die Filterungen der jeweiligen Seitenbänder bei der gleichen Zwischenfrequenz erfolgen, wodurch die gleichen elektrischen Komponenten für den ersten und den zweiten Pfad eingesetzt werden können.

Auch bei dieser Realisierung kann durch den Einsatz von weiteren Oszillatoren für die zweite Mischstufe des jeweiligen Seitenbands eine Auswertung der Tag-Antwort bei einer beliebigen Zwischenfrequenz durchgeführt werden.

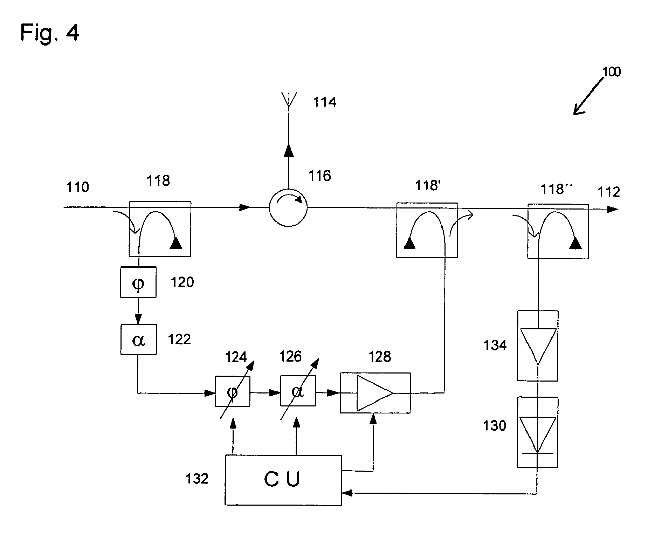

In Fig. 4 ist ein schematisch vereinfachter Aufbau einer Ausführungsform einer Kompensationsschaltung 100 gemäß der Erfindung dargestellt. Diese Ausführungsform umfasst mindestens einen Koppler 118, der einen definierten Leistungsanteil des Trägersignals zwischen dem Sendeanschluss 110 und mindestens einem Zirkulator 116 auf einen parallel laufenden Kompensationspfad auskoppelt. Sie umfasst ferner mindestens einen Koppler 118', der zur Einkopplung eines definierten Leistungsanteils des in Amplitude und Phase manipulierten Signals aus dem Kompensationspfad auf den Empfangspfad zwischen dem zur Sende- und Empfangsantenne 114 führenden Zirkulator 116 und dem Empfangsanschluss 112 dient. Ferner ist eine Einheit vorgesehen, bestehend aus mindestens einem Koppler 118'', der einen definierten Anteil der Leistung zwischen dem Koppler 118' und dem Empfangsanschluss 112 auskoppelt, und mindestens einer weiteren Komponente, beispielsweise einem Detektor 130, zur Ermittlung der erreichten Unterdrückung anhand der vorhandenen Leistung, wobei die weitere Komponente den ermittelten Leistungspegel an eine Steuereinheit 132 weiterleitet.

Gemäß dieser Ausführungsform des elektrischen Zirkulators wird der unerwünschte Übersprecher durch ein amplitudengleiches, jedoch um 180° verschobenes Signals überlagert. Hierfür wird ein über den Koppler 118 ausgekoppelter, definierten Anteil des vom Sendeanschluss 110 stammenden Trägersignals durch mindestens einen variablen Phasenschieber 124, mindestens ein variables Dämpfungsglied 126 sowie mindestens eine Verstärkereinheit 128 in der Amplitude und Phase so variiert, dass die Überlagerung dieses Signals über den Koppler 118' mit dem über den Zirkulator 116 und der Sende-/Empfangsantenne 114 vorhandenen Übersprecher den Übersprecher auslöscht oder zumindest bis auf einen Wert unterhalb der Empfindlichkeit der Empfangseinheit kompensiert.

Die Koppler bzw. unsymmetrischen Leistungsteiler 118, 118' und 118'' können mit konzentrierten Komponenten bzw. so genannten SMDs (Surface Mounted Devices) realisiert werden. Eine alternative Realisierung dieser Koppler kann durch verteilte Elemente bzw. gekoppelte Leitersegmente erfolgen.

Zusätzlich zum variablen Phasenschieber 124, der sowohl aus schaltbaren Komponenten mit diskreten Werten als auch aus beispielsweise spannungsgesteuerten Chips mit analogen Werten bestehen kann, kann auch mindestens ein fester Phasenschieber 120 eingesetzt werden, um die Phasenlage des ausgekoppelten Signalanteils auf den Dynamikbereich des variablen Phasenschiebers anzupassen. Solche feste Phasenschieber 120 können als fertige Chips, als SMD-Komponenten oder als Leitungselemente aufgebaut sein.

In ähnlicher Weise kann zusätzlich zum variablen Dämpfungsglied 126, das sowohl aus schaltbaren Komponenten mit diskreten Werten als auch aus beispielsweise Spannungsgesteuerten Chips mit analogen Werten bestehen kann, auch mindestens ein festes Dämpfungsglied 122 eingesetzt werden, um die Amplitudenlage des ausgekoppelten Signalanteils auf den Dynamikbereich des variablen Dämpfungsglieds 126 anzupassen. Solche feste Dämpfungsglieder 122 können beispielsweise als einzelne Chips bzw. als SMD-Komponenten aufgebaut sein.

Die Aufgabe der Steuereinheit 132 besteht in der Auswertung des durch den Leistungsdetektor 130 ermittelten Übersprechers sowie der Einstellung der für die Unterdrückung notwendigen Parameter bezüglich Phase und Amplitude in den einzelnen Module 124, 126 auf dem Kompensationspfad. Ein möglicher Algorithmus zur Ermittlung einer guten Unterdrückung des Übersprechers vom Trägersignal auf den Empfangspfad besteht in einem iterativen Durchlaufen der unterschiedlichen Kombinationen von Dämpfungs- und Phasenwerten vom variablen Phasenschieber 124 und vom variablen Dämpfungsglied 126, wobei bei jedem Durchlauf der Wertebereich der jeweils einstellbaren Variablen um den besten Wert eingeschränkt und die Diskretisierung verfeinert wird.

Um den Dynamikbereich des Leistungsdetektors 130 zu erweitern, kann eine Verstärkereinheit 134 bestehend aus mindestens einem Verstärker, optional mit einer selbst-regulierenden Verstärkung (so genanntes Automatic Gain Control), eingesetzt werden.

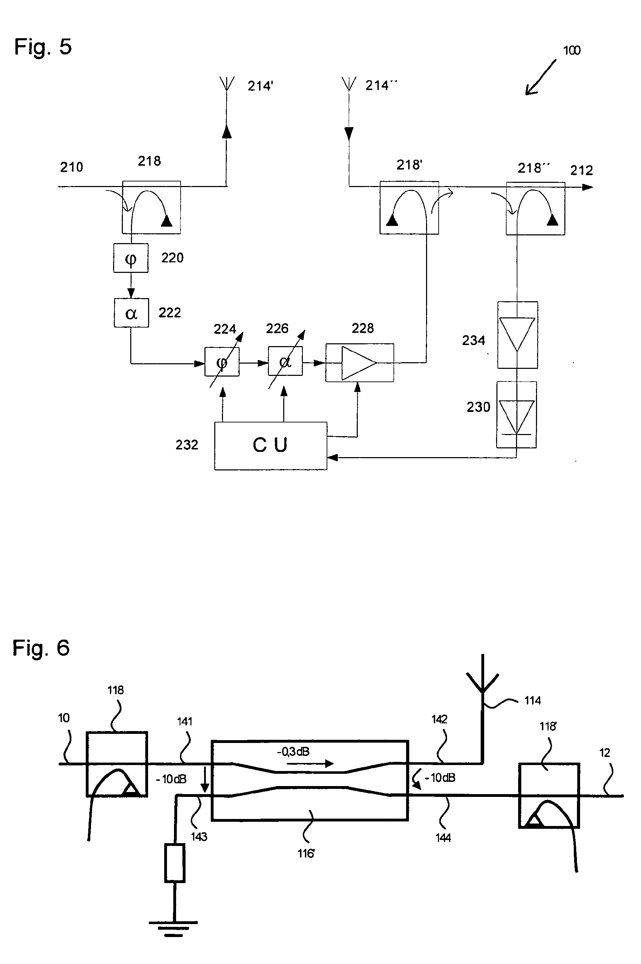

Fig. 5 stellt eine alternative Ausführung der Erfindung dar. Hierbei werden der Zirkulator und die kombinierte Sende-/ Empfangsantenne, die im Frontend zur Realisierung des beim Backscatter-Verfahren notwendigen Duplexbetriebs eingesetzt werden, durch eine Antennenanordnung bestehend aus zwei getrennten Antennen 214', 214'' für das Sende- bzw. das Empfangssignal ersetzt.

In diesem Fall ist der Übersprecher zwischen den beiden Antennen 214', 214'' vergleichbar mit dem Übersprecher über den Zirkulator und kann auf gleiche Weise durch den Einsatz der in dieser Schrift beschriebenen elektrischen Kompensationsschaltung unterdrückt werden.

In Fig. 6 ist schematisch dargestellt, wie ein Richtkoppler 116' an Stelle eines Zirkulators verwendet werden kann. Das Eingangssignal liegt an einem ersten Anschluss 141 des Richtkopplers 116', von wo aus es mit geringem Verlust von -0,3 dB auf einen zweiten Anschluss 142 überkoppelt wird. Mit einem Verlust von -10 dB wird das Eingangssignal außerdem vom ersten Anschluss 141 auf einen dritten Anschluss 143 überkoppelt, der mit einem Abschlusswiderstand gegen Masse so abgeschlossen ist, dass dort keine Reflexionen auftreten. Schließlich wird das von der Antenne 114 kommende Signal im gezeigten Beispiel mit -10 dB Verlust auf einen vierten Anschluss 144 des Richtkopplers 116' gekoppelt. Im Übrigen ist dieses Ausführungsbeispiel ebenso aufgebaut, wie die vorstehend beschriebenen Varianten. Der Übersichtlichkeit halber sind die weiteren Bestandteile in Fig. 6 weggelassen. In allen Figuren sind äquivalente Komponenten mit denselben Bezugszeichen versehen.

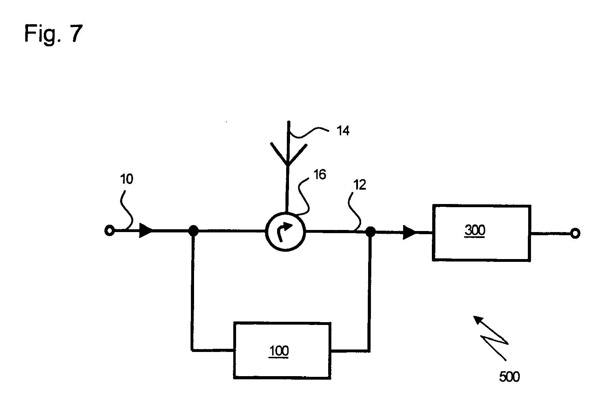

Fig. 7 zeigt schematisch eine erfindungsgemäße RFID-Readereinheit 500. Die RFID-Readereinheit 500 beinhaltet einen erfindungsgemäßen Filterschaltkreis 300, der mit dem Ausgang 12 des Zirkulators 16 verbunden ist. Um ein Übersprechen vom Eingang 10 auf den Ausgang 12 des Zirkulators 16 zu minimieren, ist ein Kompensationsschaltkreis 100, der ebenfalls vorstehend im Einzelnen beschrieben wurde, parallel zu dem Zirkulator 16 angeschlossen.

In allen Figuren sind äquivalente Komponenten mit denselben Bezugszeichen versehen.

In dieser Schrift wird eine in der Frequenzlage verstimmbare Filterschaltung zur Unterdrückung eines beim RFID Backscatter-Verfahren vorhandenen Trägersignals vorgestellt, die gleichzeitig eine Filterung des Betriebskanals durch ein Bandpassfilter höchster Güte ermöglicht.

Durch die Unterdrückung des Trägersignals bei bis zu 40 dB kann die Reichweite des RFID-Systems um mehr als das 8-fache erhöht, bzw. bei einer konstanten Entfernung die Bitfehlerrate verbessert werden.

Wegen der Frequenzselektivität der Filterung kann die hier beschriebene Schaltung in RFID-Systemen mit einem Mehrkanalbetrieb eingesetzt werden. Bei Systemen mit einem einzelnen Betriebskanal kann die Frequenzlage des Trägersignals dynamisch geändert werden, um einen größeren Frequenzversatz zu anderen benachbarten System bzw. eventuellen Störern zu ermöglichen.

Der analoge Schaltungsaufbau basierend auf Komponenten der Massenelektronik sichert eine schnelle Signalverarbeitung sowie ein kostengünstige Realisierung.

Das in dieser Patentschrift beschriebene elektrisch verstimmbare Kanalfilter mit Trägerunterdrückung kombiniert eine frequenzselektive analoge Trägerunterdrückung mit einer Filterung des Betriebkanals und kann zusätzlich zu den oben beschriebenen Ansätzen zu einer verbesserten Trägerunterdrückung im Empfangspfad eingesetzt werden. Die Verbesserung der Trägerunterdrückung führt zu einer proportionalen Verbesserung der Systemdynamik und folglich zu einer erhöhten Reichweite und/oder eine verbesserte Bitfehlerrate. Gleichzeitig wird die Eingangsrauschleitung reduziert und somit die Empfängerempfindlichkeit und das Signal-Rausch-Verhältnis verbessert.

Die in dieser Schrift beschriebene Erfindung ermöglicht eine Unterdrückung des Übersprechers vom Trägersignal im Eingangspfad kombiniert mit einer gleichzeitigen frequenzselektiven Filterung des Betriebskanals, die insbesondere bei einer Multireader-Umgebung notwendig ist. Hierdurch wird die Systemdynamik um die hierbei hervorgerufene Unterdrückung des Trägersignals erhöht, was in eine Erhöhung der Reichweite oder zu Verbesserung der Bitfehlerrate bei gleicher Entfernung resultiert.

Bezugszeichenliste

| | |
|---|---|
| 10 | Tx-Anschluss |
| 12 | Rx-Anschluss |
| 14 | Sende- /Empfangsantenne |
| 16 | Zirkulator |
| 100 | Kompensationsschaltung |
| 110 | Tx-Anschluss |
| 112 | Rx-Anschluss |
| 114 | Sende- /Empfangsantenne |
| 114' | Sendeantenne |
| 114" | Empfangsantenne |
| 116 | Zirkulator |
| 116' | Richtkoppler |
| 118 | Koppler oder unsymmetrischer Leistungssteiler |
| 118' | Koppler oder unsymmetrischer Leistungssteiler |
| 118" | Koppler oder unsymmetrischer Leistungssteiler |
| 120 | fester Phasenschieber |
| 122 | fester Dämpfungsglied |
| 124 | variabler Phasenschieber |
| 126 | variabler Dämpfungsglied |
| 128 | Verstärkereinheit |
| 130 | Leistungsdetektor oder Empfangsmischer |
| 132 | Steuereinheit |
| 134 | Verstärkereinheit |
| 141 | erster Anschluss des Richtkopplers |
| 142 | zweiter Anschluss des Richtkopplers |
| 143 | dritter Anschluss des Richtkopplers |
| 144 | vierter Anschluss des Richtkopplers |
| 210 | Tx-Anschluss |
| 212 | Rx-Anschluss |
| 214' | Sendeantenne |
| 214" | Empfangsantenne |
| 218 | Koppler oder unsymmetrischer Leistungssteiler |
| 218' | Koppler oder unsymmetrischer Leistungssteiler |
| 218" | Koppler oder unsymmetrischer Leistungssteiler |
| 220 | fester Phasenschieber |
| 222 | fester Dämpfungsglied |
| 224 | variabler Phasenschieber |
| 226 | variabler Dämpfungsglied |
| 228 | Verstärkereinheit |
| 230 | Leistungsdetektor oder Empfangsmischer |

232 Steuereinheit
234 Verstärkereinheit
300 Filterschaltung
310 Eingangsport der Schaltung
312 Ausgangsport der Schaltung
314 Oszillator
316 Signalteiler
318 erste Mischerstufe
320 zweite Mischerstufe
322 Bandsperre bei der Zwischenfrequenz
324 Bandpassfilter bei der Zwischenfrequenz
326 optionale Verstärkerstufe bei der Zwischenfrequenz
410 Eingangsport der Schaltung
412 Ausgangsport der Schaltung
414 Oszillator fürs erste Seitenband
416 Oszillator fürs zweite Seitenband
418 erste Mischerstufe für das erste Seitenband
420 erste Mischerstufe für das zweite Seitenband
422 Bandpassfilter des ersten Seitenbands bei der Zwischenfrequenz
424 Bandpassfilter des zweiten Seitenbands bei der Zwischenfrequenz
426 zweite Mischerstufe fürs erste Seitenband
428 zweite Mischerstufe fürs zweite Seitenband
430 erste Signalteilerstufe
432 zweite Signalteilerstufe
434 optionale Verstärkerstufe des ersten Seitenbands
436 optionale Verstärkerstufe des zweiten Seitenbands
438 Signalteiler für das erste Oszillatorsignal
440 Signalteiler für das zweite Oszillatorsignal
500 RFID-Readereinheit

**Patentansprüche**

1. Einstellbare Schaltung zum Filtern eines Übertragungskanals eines RFID-Signals und zum Unterdrücken eines Trägersignals im Empfangspfad zwischen einem Eingangstor (310; 410) und einem Ausgangstor (312; 412),
mit mindestens einem einstellbaren Oszillator (314; 414, 416) zum Erzeugen eines Oszillatorsignals,
mit mindestens einer mit dem Oszillator (314) zusammenwirkenden Eingangsmischerstufe (318; 418, 420) zum Mischen eines Eingangssignals mit Hilfe des Oszillatorsignals auf eine Zwischenfrequenz und
mit einem der Eingangsmischerstufe (318) oder den Eingangsmischerstufen (418, 420) nachgeordneten Sperreinrichtung (322; 422, 424) zum Unterdrükken des Trägersignals bei der Zwischenfrequenz.

2. Schaltung nach Anspruch 1,
**dadurch gekennzeichnet,**
**dass** die Sperreinrichtung ein Bandsperrfilter (322) aufweist.

3. Schaltung nach Anspruch 1 oder 2,
**dadurch gekennzeichnet,**
**dass** zum Filtern des Übertragungskanals bei der Zwischenfrequenz ein Bandpassfilter (324) vorhanden ist, welcher insbesondere dem Bandsperrfilter (322) nachgeordnet ist.

4. Schaltung nach Anspruch 2 oder 3,
**dadurch gekennzeichnet,**
**dass** dem Bandsperrfilter (322) mindestens eine Ausgangsmischerstufe (320) nachgeordnet ist.

5. Schaltung nach einem der Ansprüche 1 bis 4,
**dadurch gekennzeichnet,**
**dass** die Sperreinrichtung ein erstes Bandpassfilter (422) zum Filtern eines ersten Seitenbands des Eingangssignals und ein zweites Bandpassfilter (424) zum Filtern eines zweiten Seitenbands des Eingangssignals aufweist.

6. Schaltung nach Anspruch 5,
**dadurch gekennzeichnet,**
**dass** ein Leistungsteiler (430) vorhanden ist zum Teilen eines Eingangssignals zwischen einem ersten Pfad und einem zweiten Pfad,
**dass** mindestens ein erster einstellbarer Oszillator (414) vorhanden ist zum Erzeugen eines ersten Oszillatorsignals,
**dass** im ersten Pfad eine mit dem ersten Oszillator (414) zusammenwirkende erste Eingangsmischerstufe (418) vorhanden ist zum Mischen des Eingangssignals mit Hilfe des ersten Oszillatorsignals auf eine erste Zwischenfrequenz, dass der ersten Eingangsmischerstufe (418) der erste Bandpassfilter (422) zum Filtern des ersten Seitenbands des Eingangssignals bei der ersten Zwischenfrequenz nachgeordnet ist,
**dass** im zweiten Pfad eine mit dem ersten Oszillator (414) oder einem zweiten Oszillator (416) zusammenwirkende zweite Eingangsmischerstufe (420) vorhanden ist zum Mischen des Eingangssignals mit Hilfe des Oszillatorsignals auf eine zweite Zwischenfrequenz und
**dass** der zweiten Eingangsmischerstufe (420) der zweite Bandpassfilter (424) zum Filtern des zweiten Seitenbands des Eingangssignals bei der zweiten Zwischenfrequenz nachgeordnet ist.

7. Schaltung nach Anspruch 5 oder 6,
**dadurch gekennzeichnet,**
**dass** dem ersten Bandpassfilter (422) eine erste Ausgangsmischerstufe (426) nachgeordnet ist und
**dass** dem zweiten Bandpassfilter (424) eine zweite Ausgangsmischerstufe (428) nachgeordnet ist.

8. Schaltung nach einem der Ansprüche 5 bis 7,

**dadurch gekennzeichnet,**
**dass** das erste Bandpassfilter (422) und das zweite Bandpassfilter (424) baugleich sind.

9. Schaltung nach einem der Ansprüche 1 bis 8,
**dadurch gekennzeichnet,**
**dass** zwischen der Eingangsmischerstufe (318) oder den Eingangsmischerstufen (418, 420) und der Sperreinrichtung (322; 422, 424) mindestens ein verstärkendes Element, insbesondere mindestens ein separater Verstärker (326; 434, 436), vorhanden ist.

10. Schaltung nach einem der Ansprüche 1 bis 9,
**dadurch gekennzeichnet,**
**dass** die Eingangsmischerstufen Abwärtsmischerstufen (318; 418, 420) sind und/oder
**dass** die Ausgangsmischerstufen Aufwärtsmischerstufen (320; 426, 428) sind.

11. Schaltung nach Anspruch 9 oder 10,
**dadurch gekennzeichnet,**
**dass** vor den verstärkenden Elementen, insbesondere vor den separaten Verstärkern (326; 434, 436), jeweils mindestens ein Eingangsfilter, insbesondere mindestens ein Quarz, zum Herausfiltern des Trägersignals vorhanden ist.

12. Schaltung nach einem der Ansprüche 4 bis 11,
**dadurch gekennzeichnet,**
**dass** die Ausgangsmischerstufen (320; 426, 428) mit demselben Oszillator (314; 414, 416) zusammenwirken wie die in demselben Pfad angeordneten Eingangsmischerstufen (318; 418, 420).

13. RFID-Readereinheit mit einer Schaltung nach einem der Ansprüche 1 bis 12.

14. RFID-Readereinheit nach Anspruch 13,
**gekennzeichnet durch** eine Kompensationsschaltung zur Unterdrückung des Übersprechers zwischen dem Sendepfad und dem Empfangspfad, mit

- einer Einrichtung zur Auskopplung eines Signalanteils eines Trägersignals aus dem Sendepfad in einen Kompensationspfad,
- wobei der Kompensationspfad mindestens einen variablen Phasenschieber (124; 224) und mindestens ein variables Dämpfungsglied (126; 226) zum Variieren des Signalanteils in der Phase beziehungsweise in der Amplitude aufweist,
- einer Einrichtung zur Einkopplung des in der Phase und in der Amplitude variierten Signalanteils aus dem Kompensationspfad auf den Empfangspfad,
- einer Einheit zur Bestimmung des im Empfangspfad vorhandenen Übersprechers,
- sowie einer Steuereinheit (132; 232) für den variablen Phasenschieber (124; 224) und das variable Dämpfungsglied (126; 226), welche mit der Einheit zur Bestimmung des vorhandenen Übersprechers in Signalverbindung steht.

15. RFID-Readereinheit nach Anspruch 14,
**dadurch gekennzeichnet,**
**dass** zwischen dem Sendepfad und dem Empfangspfad ein Zirkulator (116) oder ein Richtkoppler (116') vorgesehen ist, welcher zu mindestens einer Sende-/Empfangsantenne (114) führt, wobei der Sendepfad zwischen einem Sendeanschluss (110) und dem Zirkulator (116) oder dem Richtkoppler (116') und der Empfangspfad zwischen dem Zirkulator (116) oder dem Richtkoppler (116') und einem Empfangsanschluss (112) gegeben ist.

16. RFID-Readereinheit nach Anspruch 14,
**dadurch gekennzeichnet,**
**dass** am Sendepfad mindestens eine Sendeantenne (214') und am Empfangspfad mindestens eine Empfangsantenne (214") vorgesehen ist, wobei der Sendepfad zwischen einem Sendeanschluss (210) und der Sendeantenne (214') und der Empfangspfad zwischen der Empfangsantenne (214") und einem Empfangsanschluss (212) gegeben ist.

17. RFID-Readereinheit nach einem der Ansprüche 14 bis 16,
**dadurch gekennzeichnet,**
**dass** die Steuereinheit (132; 232) so eingerichtet ist, dass sie den Kompensationspfad zwischen einzelnen Lesevorgängen der RFID-Readereinheit anpasst, und
**dass** die Steuereinheit (132; 232) so eingerichtet ist, dass der variable Phasenschieber (124; 224) und das variable Dämpfungsglied (126; 226) unterschiedliche Kombinationen von Dämpfungs- und Phasenwerten iterativ durchlaufen, wobei nach einem Durchlauf der Wertebereich von Dämpfung und Phase um einen im Durchlauf ermittelten besten Wert für den Übersprecher eingeschränkt wird und eine Diskretisierung der Dämpfungs- und Phasenwerte verfeinert wird.

Fig. 1

Fig. 2

Fig. 3

Fig. 4

## Fig. 5

## Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6567648 B1
- US 6603391 B1
- WO 2006088583 A2
- US 20060098765 A1
- US 20080081551 A1

**In der Beschreibung aufgeführte Nicht-Patentliteratur**

- **Klaus Finkenzeller.** RFID-Handbuch. Carl Hanser Verlag